# FASCICULE DE BREVET EUROPEEN

(11) **EP 2 352 925 B1**
(45) Date de publication et mention de la délivrance du brevet: **05.09.2018**
(21) Numéro de dépôt: 09768129.0
(22) Date de dépôt: 02.11.2009
(51) Int. Cl.: F16B 2/24, F16B 5/06, F16B 5/12

(54) **PROCEDE DE MONTAGE D'UNE PIECE SUR UN CORDON PROFILE, DISPOSITIF DE FIXATION INTERMEDIAIRE POUR LA FIXATION D'UNE PIECE SUR UN CORDON PROFILE, VITRAGE ET UTILISATION DUDIT DISPOSITIF**
VERFAHREN ZUR MONTAGE EINES TEILES AUF EINEM PROFILSTRANG, VORRICHTUNG ZUR ZWISCHENBEFESTIGUNG EINES TEILES AUF EINEM PROFILSTRANG, VERGLASUNG UND VERWENDUNG EINER SOLCHEN VORRICHTUNG
METHOD FOR ASSEMBLING A PART ON A PROFILED STRIP, INTERMEDIATE DEVICE FOR CONNECTING A PART ON A PROFILED STRIP, GLAZING AND USE OF SAID DEVICE

(30) Priorité: 05.11.2008 FR 0857506
(43) Date de publication de la demande: 10.08.2011
(73) Titulaire: Saint-Gobain Glass France, 92400 Courbevoie (FR)
(72) Inventeur: HUCHET, Gérard, F-60350 Autreches (FR); GARCIA, Ricardo, F-75010 Paris (FR)
(74) Mandataire: Saint-Gobain Recherche
(86) Numéro de dépôt international: PCT/FR2009/052115
(87) Numéro de publication internationale: WO 2010/052418

(56) Documents cités:
- US-A- 3 673 643
- US-A- 3 854 269

## Description

La présente invention se rapporte au domaine de la réalisation de cordons profilés sur des vitrages.

Elle concerne plus particulièrement un dispositif de fixation intermédiaire et son procédé de montage pour le montage d'une pièce rapportée, telle qu'un enjoliveur de joint, sur une portion d'un cordon profilé fixé à la périphérie d'un vitrage, ce montage étant opéré par l'intermédiaire d'un dispositif de fixation intermédiaire comportant au moins un clip présentant au moins une partie de coopération amont destinée à permettre la coopération avec ledit cordon profilé et une partie de coopération aval destinée à permettre la coopération avec ladite pièce rapportée.

L'art antérieur connaît de la demande internationale de brevet N° WO 2005/033526 un système de clipage de profilé enjoliveur pour cordon profilé utilisant un clip souple présentant un premier bossage simple destiné à être introduit dans une première rainure simple du cordon profilé et un deuxième bossage plus complexe, en forme de crochet, destiné à être introduit dans une rainure également plus complexe du cordon profilé par déformation du clip souple. Le clip est ainsi crocheté sur le cordon profilé. Un effet de pinçage du cordon profilé est par ailleurs obtenu en réalisant une distance légèrement plus courte entre les deux bossages du clip qu'entre les deux rainures du cordon profilé.

Pour la fixation du profilé enjoliveur, le profilé est d'abord introduit dans un bossage du clip, puis le clip est à nouveau déformé pour permettre de passer le profilé enjoliveur au-dessus d'une saillie du cordon profilé.

Or, il se trouve que cette déformation est exactement contraire à la déformation qui permet d'accrocher le clip sur le cordon profilé.

Une fois le montage terminé le clip souple est ainsi en permanence soumis à des tensions opposées qui tentent à la fois de le maintenir crocheté sur le cordon profilé et de maintenir le profilé enjoliveur clipé sur le clip.

Ce système ne donne pas satisfaction car les vibrations perçues au niveau du cordon profilé lors du fonctionnement du véhicule, particulièrement sur route cahoteuse, provoquent des déformations du joint (cordon profilé) qui peuvent engendrer un décrochement du clip souple sous tension permanente et par voie de conséquence peuvent entraîner la perte du profilé enjoliveur.

Il est connu par ailleurs de la demande internationale de brevet N° WO 2007/003823, un dispositif de fixation intermédiaire du type de celui présenté ci-avant.

Selon ce document, la partie de coopération amont comporte au moins un élément mâle saillant ou un élément femelle creux, cet élément coopérant respectivement avec un élément femelle creux ou un élément mâle saillant correspondant ménagé dans le cordon profilé, ledit élément femelle creux présentant des dimensions intérieures au moins partiellement inférieures aux dimensions extérieures dudit élément mâle saillant.

Cette coopération est ainsi du type « tenon-mortaise » avec un effet de frottement entre une partie au moins des surfaces des éléments.

Un avantage important de ce dispositif par rapport au précédent réside dans la fiabilité du système de fixation : il permet un maintien fiable du profilé enjoliveur y compris dans des conditions extrêmes notamment de vibration.

Toutefois, ce système complexifie la conception du cordon profilé et oblige à concevoir un cordon profilé particulier qui présente des zones mâles ou femelles particulières.

En particulier, ce système oblige à positionner le clip avec une grande précision pour que la partie de coopération amont coopère correctement avec la partie correspondante ménagée dans le cordon profilé.

L'art antérieur connaît par ailleurs du brevet américain N° US 3,869,760, un clip à pattes flexibles, ces pattes étant écartées pour passer un bossage dans lequel l'extrémité des pattes pénètre lorsqu'une force d'extraction est appliquée sur le clip.

L'art antérieur connaît en outre de la demande internationale de brevet N° WO 2008/084076 un système de clipage de profilé enjoliveur pour cordon profilé, ce cordon profilé comportant des zones aménagées pour la réception d'éléments de rétention du clip, ces zones aménagées se présentant sous la forme de trous permettant de retenir les éléments de rétention du clip qui se présentent sous la forme de flèches.

Pour réaliser la coopération entre le clip et le cordon profilé, il est alors nécessaire de positionner avec précision le clip vis-à-vis du cordon profilé pour que les éléments de rétention du clip pénètrent correctement dans les moyens de réception du cordon profilé. En outre, le moule d'encapsulation doit avoir des pièces mobiles à l'endroit de chaque clip pour permettre le démoulage.

Le but de l'invention est de pallier les inconvénients de l'art antérieur en proposant un système de fixation d'un clip sur un cordon profilé qui ne nécessite pas un positionnement extrêmement précis du clip vis-à-vis du cordon profilé lors du clipage du clip sur le cordon profilé.

Ainsi, le clipage du clip sur le cordon profilé peut être automatisé, c'est-à-dire réalisé par un automate.

Toutefois, il faut que le clipage puisse continuer à être opéré manuellement afin de permettre de repositionner un enjoliveur sur un nouveau vitrage lors du remplacement du vitrage sans remplacement de l'enjoliveur en atelier de réparation ou de remplacer un enjoliveur sans remplacer le vitrage en atelier de réparation.

La présente invention se rapporte ainsi dans son acception la plus large à un procédé de montage d'une pièce rapportée, telle qu'un enjoliveur, sur une portion d'un cordon profilé fixé à la périphérie d'un vitrage selon la revendication 1. Ce montage est opéré par l'intermédiaire d'un dispositif de fixation intermédiaire comportant au moins un clip présentant au moins une partie de coopération amont destinée à permettre la coopération avec ledit cordon profilé et une partie de coopération aval destinée à permettre la coopération avec ladite pièce rapportée, ledit procédé comportant une étape de fixation dudit dispositif de fixation intermédiaire sur ledit cordon profilé. Ledit dispositif de fixation intermédiaire comporte une partie de coopération amont présentant une pluralité de pattes d'accrochage reliées par une base, l'extrémité distale de chaque patte étant déformable, lesdites extrémités distales des pattes étant déformées en appliquant une force sur les extrémités desdites pattes en direction de la matière dudit cordon profilé dans deux sens opposés pour pénétrer la matière dudit cordon profilé lors de l'étape de fixation.

Une particularité importante de la présente invention consiste à prévoir que la partie de fixation amont coopère avec une cavité du cordon profilé, mais à ne pas aménager cette cavité, c'est-à-dire sans réaliser au préalable de fente ou de trou dans la matière du cordon profilé : c'est la partie de fixation amont qui creuse elle-même la cavité lors du clipage du clip sur le cordon profilé. De ce fait, le moule permettant la formation du cordon profilé est simple, sans partie mobile et sans mécanisme associé.

Un avantage important de l'invention réside dans le fait qu'il n'est pas nécessaire de positionner le dispositif de fixation intermédiaire vis-à-vis du cordon profilé avec une grande précision ; bien-sûr, la pénétration est réalisée dans une zone choisie du cordon profilé, qui peut être aménagée et qui présenter un bossage par exemple, comme expliqué ci-après, mais cette zone est relativement grande par rapport à la dimension du dispositif de fixation intermédiaire et peut même se présenter tout le long du cordon profilé. Ainsi, dans ce cas, il n'est pas nécessaire de positionner le dispositif de fixation intermédiaire avec une grande précision selon la longueur du cordon profilé.

En outre, il est possible au besoin d'enlever le clip et de le positionner à proximité de son emplacement précédent sur le cordon si celui-ci est endommagé, ou d'enlever le clip s'il est lui aussi endommagé et de positionner le nouveau clip à proximité de l'emplacement du précédent.

De préférence, la pénétration des extrémités des pattes d'accrochage dans la matière du cordon profilé est opérée sur une profondeur p d'au moins 0,5 mm et de préférence encore d'au moins 1 mm, voire d'au moins 2 mm.

Ainsi, seule l'extrémité distale des pattes d'accrochage (c'est-à-dire l'extrémité qui est à l'oppose de la liaison avec la base) est déformée par application de la force de déformation.

Dans une variante préférée de l'invention, ladite pénétration est opérée en appliquant une force sur lesdites pattes en direction de la matière dudit cordon profilé dans deux sens opposés manuellement ou par l'intermédiaire d'une installation, mais pas par l'intermédiaire d'un moyen de fixation complémentaire (comme une vis) fixant le dispositif de fixation au cordon profilé.

Ledit clip comporte, de préférence, une base sensiblement plate, lesdites pattes d'accrochage étant orientée, au moins à la liaison avec ladite base, sensiblement perpendiculairement à ladite base.

Ledit cordon profilé présente, de préférence, un bossage d'une largeur inférieure à la base dudit clip et lesdites pattes d'accrochage pénètrent la matière dudit bossage.

Ledit cordon profilé présente par ailleurs, de préférence, un bossage d'une hauteur au moins égale et de préférence supérieure à la hauteur dudit clip, lesdites pattes pénétrant la matière dudit bossage.

Ce bossage peut se présenter sur toute la longueur du cordon profilé ou au moins sur une (ou des) zone(s) présentant (chacune) une longueur d'au moins 1,5 fois la longueur du dispositif de fixation intermédiaire.

Selon l'invention, le clip est positionné à cheval sur le bossage avant que l'extrémité desdites pattes pénètre la matière dudit bossage.

La présente invention se rapporte également à un dispositif de fixation intermédiaire pour le montage d'une pièce rapportée, tel qu'un enjoliveur, sur une portion d'un cordon profilé fixé à la périphérie d'un vitrage selon la revendication 6, c'est-à-dire à un dispositif de fixation intermédiaire pour la mise en oeuvre du procédé selon l'invention. Ce dispositif comporte au moins un clip présentant au moins une partie de coopération amont destinée à permettre la coopération avec ledit cordon profilé et une partie de coopération aval destinée à permettre la coopération avec ladite pièce rapportée. Ladite partie de coopération amont présente une pluralité de pattes d'accrochage reliées par une base, l'extrémité de chaque patte étant déformable, lesdites extrémités distales des pattes étant déformées en appliquant une force sur les extrémités desdites pattes en direction de la matière dudit cordon profilé dans deux sens opposés pour pénétrer la matière dudit cordon profilé lors de l'étape de fixation du clip sur ledit cordon profilé.

Ce dispositif comporte en outre une base sensiblement plate, lesdites pattes étant orientées sensiblement perpendiculairement à ladite base, ou en tout cas avec un angle α égal ou inférieur à 45 °, voire avec un angle α égal ou inférieur à 20 °, voire avec un angle α égal ou inférieur à 15 °, par rapport à la perpendiculaire à la base.

Par ailleurs, lesdites pattes sont disposées par deux diamétralement opposées par rapport à un plan de symétrie longitudinal central de ladite base.

Lesdites pattes comportent en outre, de préférence, chacune au moins une partie en crochet, plié à l'opposé de ladite base, de préférence selon un angle compris entre 30° et 70 °, par rapport à la perpendiculaire à ladite base.

Lesdites pattes se terminent à leur extrémité pénétrant dans la matière du cordon profilé par une pluralité de dents pointues, en particulier en forme de triangle, de préférence au nombre de 3, voire 4.

La présente invention se rapporte également au vitrage comportant au moins un dispositif de fixation intermédiaire selon l'invention pour le montage d'une pièce rapportée, telle qu'un enjoliveur, sur une portion d'un cordon profilé fixé à la périphérie du vitrage selon la revendication 8.

La présente invention se rapporte également à l'utilisation, en particulier en atelier de montage de véhicule ou en atelier de réparation de véhicule, du dispositif de fixation intermédiaire selon l'invention pour le montage d'une pièce rapportée, telle qu'un enjoliveur, sur un cordon profilé fixé à la périphérie d'un vitrage selon la revendication 9.

Les revendications dépendantes exposent des variantes avantageuses de l'invention.

Avantageusement, le système selon l'invention permet de réaliser la fixation d'au moins un clip, et de préférence plusieurs clips, pour fixer une pièce intermédiaire sur un cordon profilé, sans que ce cordon profilé ne présente de forme complexe, difficile à concevoir et à réaliser (notamment par moulage).

La présente invention sera mieux comprise à la lecture de la description détaillée ci-après d'exemples de réalisation non limitatifs et des figures ci-jointes :
- La figure 1 illustre une vue de côté de l'extrémité arrière d'un véhicule muni d'un vitrage présentant un profilé enjoliveur fixé à l'aide d'un dispositif de fixation intermédiaire selon l'invention ;
- La figure 2 illustre une vue en perspective d'un clip du dispositif de fixation intermédiaire selon l'invention ;
- La figure 3 illustre une vue de face du clip de la figure 2 ;
- La figure 4 illustre une vue de côté d'un clip du dispositif de fixation intermédiaire selon l'invention ;
- La figure 5 illustre une vue de dessus du clip de la figure 4 ; et
- Les figures 6 et 7 illustrent respectivement une vue en coupe selon AA et BB de la figure 4 ;
- Les figures 8 et 9 illustrent respectivement une vue en perspective et une vue de face du positionnement du clip de la figure 2 positionné sur le cordon profilé avant pénétration du cordon profilé ;
- La figure 10 illustre une vue en coupe du cordon profilé au niveau des pattes d'accrochage du clip des figures 2 et 3 lors du clipage du clip sur le cordon profilé ;
- La figure 11 illustre une vue en coupe du cordon profilé au niveau des pattes d'accrochage du clip de la figure 2 lors du positionnement de l'enjoliveur ; et
- La figure 12 illustre une vue en coupe du cordon profilé au niveau des pattes d'accrochage du clip de la figure 2 après clipage de l'enjoliveur.

La présente invention se rapporte à un dispositif de fixation intermédiaire 1 pour le montage d'une pièce rapportée 2, telle qu'un enjoliveur 2', sur une portion d'un cordon profilé 3 fixé à la périphérie d'un vitrage 4, et notamment un vitrage de véhicule.

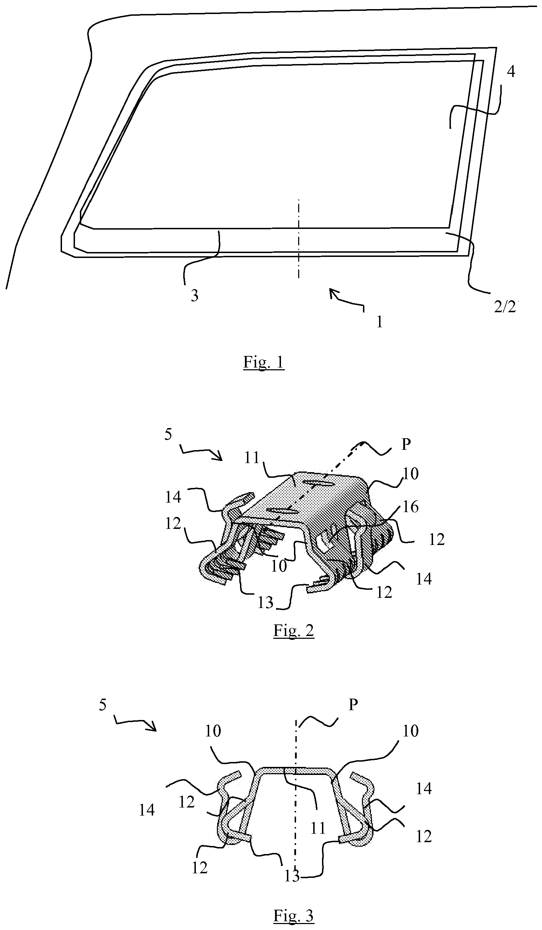

La figure 1 illustre une extrémité arrière d'un véhicule automobile muni d'un vitrage 4 fixe sur la périphérie duquel on a réalisé un cordon profilé 3 en un matériau polymère souple.

Le matériau polymère constitutif du cordon profilé 3 peut être un thermoplastique (PVC, TPE, ...), un polyuréthanne ou encore un caoutchouc synthétique du type EPDM ou toute autre matière adéquate.

Le cordon profilé 3 a été fabriqué par mise en oeuvre d'un procédé de fabrication appelé « encapsulation » car il comporte une étape de moulage du cordon profilé 3 dans un dispositif de moulage, entre deux éléments de moulage, un élément de moulage accueillant la face intérieure du vitrage et un élément de moulage accueillant la face extérieure du vitrage, ces deux éléments de moulage étant refermés l'un sur l'autre pendant l'étape de moulage.

Sur la figure 1, le cordon profilé 3 est disposé sur toute la périphérie du vitrage 4 mais ce cordon profilé pourrait tout à fait n'être positionné que sur une partie de la périphérie du vitrage ou sur une partie quelconque du vitrage.

Pour améliorer l'aspect esthétique du vitrage, une partie du cordon profilé 3 visible de l'extérieur du véhicule est masquée par un profilé enjoliveur 2' qui est ici disposé seulement en partie basse du vitrage, mais qui pourrait également être disposé sur toute la périphérie du vitrage 4 et/ou sur une partie quelconque du vitrage.

Le vitrage 4 peut être un vitrage monolithique, c'est-à-dire constitué d'une feuille de matière unique, ou être un vitrage composite, c'est-à-dire constitué de plusieurs feuilles de matière entre lesquelles est insérée au moins une couche de matière adhérente dans le cas des vitrages feuilletés, ou au moins un espace intercalaire dans le cas des vitrages multiples (doubles vitrages, triples vitrages, ...). La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie une bande d'ornementation, non illustrée ici. Cette bande d'ornementation résulte en général d'un dépôt d'émail, réalisé sur la face intérieure du vitrage ou sur une face intercalaire du vitrage pour les vitrages composites, mais elle peut également résulter d'une coloration partielle et/ou périphérique d'une feuille de matière utilisée, notamment d'une feuille en matière organique.

Le dispositif intermédiaire 1 selon l'invention comporte, pour la fixation du profilé enjoliveur 2' au moins un clip 5, comme par exemple celui qui est illustré en figures 2 et 3, plus rigide que le cordon profilé 3, et de préférence plusieurs clips 5 répartis le long du profilé enjoliveur 2' suivant la longueur dudit profilé enjoliveur.

Chaque clip 5 présente au moins d'une part une partie de coopération amont destinée à permettre la coopération entre le clip et ledit cordon profilé 3 et d'autre part une partie de coopération aval destinée à permettre la coopération entre le clip et ledit profilé enjoliveur 2'.

Dans une version de l'invention non illustrée ici, le (ou les) clip(s) est (ou sont) venu(s) de matière avec la pièce rapportée (profilé enjoliveur). Dans cette version, la coopération entre le clip et ledit profilé enjoliveur s'effectue ainsi par la matière constituant la pièce unique : enjoliveur intégrant le (ou les) clip(s).

Dans cette version de l'invention, cette pièce unique peut être en métal ou en alliage métallique ou peut être en matière plastique. Lorsque la pièce unique est en matière plastique, elle peut être fabriquée par moulage et recouverte dans sa partie visible après le montage du vitrage d'une peinture présentant l'aspect d'un métal.

Dans toutes les versions de l'invention illustrées ici d'une part le profilé enjoliveur 2' et d'autre part le (ou les) clip(s) 5 constituent des pièces différentes qui ne sont assemblées ensemble qu'au moment du montage du profilé enjoliveur 2' contre le cordon profilé 3 fixé préalablement contre le bord inférieur du vitrage 4 (par exemple par encapsulation) ou sur tout ou partie de son pourtour.

Dans toutes ces versions, la partie de coopération amont du clip est fixée au cordon profilé 3 avant que le profilé enjoliveur 2' ne soit fixé au clip grâce à la partie de coopération aval.

Le clip est choisi dans une matière présentant une rigidité supérieure à celle du cordon profilé. Le clip peut ainsi être en métal ou en alliage métallique, ou encore en matière plastique. Il présente un plan longitudinal de symétrie P selon sa longueur.

Selon l'invention, la partie de coopération amont du clip 5 présente une pluralité de pattes 10 d'accrochage déformables, lesdites pattes étant déformables de façon à pénétrer la matière dudit cordon profilé 3 lors de l'étape de fixation du clip 5 sur ledit cordon profilé 3 (et donc aussi en partie à l'intérieur du cordon profilé).

Le clip 5 selon l'invention comporte une base 11 sensiblement plate qui relie les pattes 10, lesdites pattes 10 étant orientée sensiblement perpendiculairement à ladite base 11, vers le bas sur les figures, ou en tout cas avec un angle égal ou inférieur à 45 ° par rapport à la perpendiculaire à la base.

Les pattes 10 sont ici au nombre de quatre et sont disposées par deux diamétralement opposées par rapport au plan P.

Chaque patte 10 se termine par une partie en crochet 12 qui est pliée non pas vers la base 11 mais à son opposée. C'est cette partie en crochet 12 qui constitue l'extrémité distale de chaque patte qui est déformée par application de la force de déformation en direction de la matière dudit cordon profilé 3 dans deux sens opposés pour pénétrer la matière dudit cordon profilé 3 lors de l'étape de fixation.

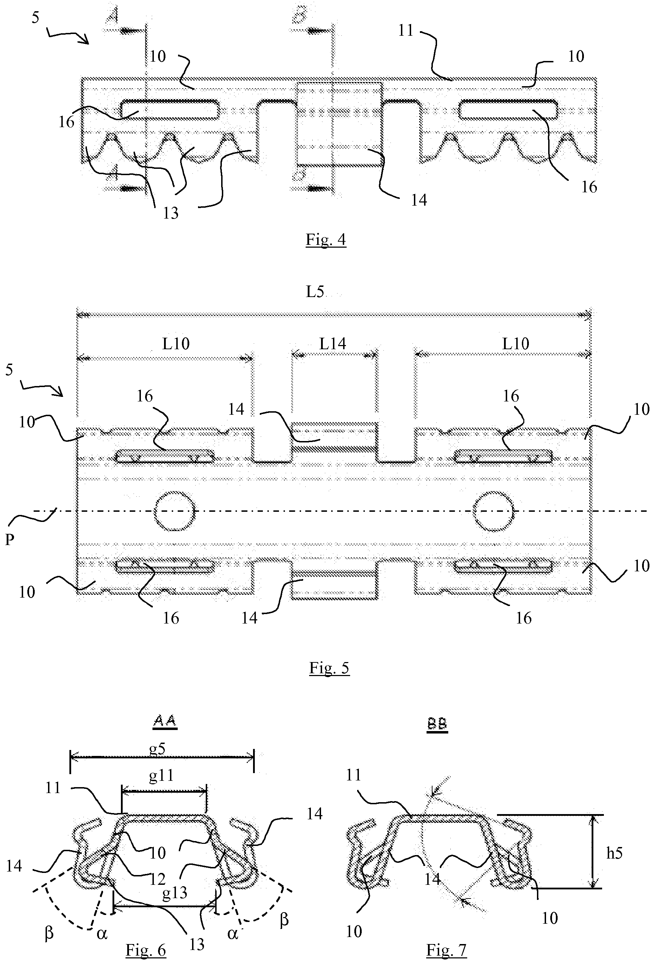

Chaque partie en crochet 12 se termine à son extrémité par une pluralité de dents 13 pointues, deux dents triangulaires pleines au centre du crochet et deux demi-dents triangulaires aux extrémités latérales du crochet, comme visible en figure 4.

La partie de coopération aval du clip 5 présente une pluralité d'ailettes 14, formant à leurs extrémités 15 des butées pour des moyens de retenus élastiques prévus sur la face intérieure de l'enjoliveur 2'.

Dans l'exemple de réalisation illustré aux figures 4 à 7, le clip 5 présente une longueur L5 d'environ 30 mm, une largeur hors-tout g5 d'environ 10 mm et une hauteur hors-tout h5 d'environ 5 mm.

Les pattes 10 présentent chacune une longueur L10 d'environ 10 mm et les ailettes 14 présentent chacune une longueur L14 d'environ 5 mm.

La base 11 présente une largeur g11 d'environ 4,5 mm et la distance g13 entre les extrémités des dents 13 en vis-à-vis par rapport au plan P est d'environ 5,5 mm.

Comme visible en figure 6, les pattes 10 sont orientées à leur liaison avec la base 11 selon un angle α par rapport au plan de symétrie longitudinal, cet angle α étant ici de l'ordre de 15 ° par rapport à la perpendiculaire à la base 11.

Par ailleurs, les crochets 12 sont orientés à leur liaison avec leur patte 10 selon un angle β par rapport à leur patte 10, cet angle β étant ici de l'ordre de 35 °.

Les parties en crochet 12 sont donc orientées, avant la déformation, à leur liaison avec leur patte 10 selon un angle α + β par rapport au plan de symétrie longitudinal, cet angle α + β étant ici de l'ordre de 50 ° par rapport à la perpendiculaire à la base 11.

L'extrémité distale des pattes 10 étant pliée avant l'application de la déformation, la déformation appliquée consiste en un dépliage.

Après la déformation, l'angle β est nul.

Pour faciliter cette déformation, il est préférable de prévoir au moins une fenêtre 16 dans chaque patte 10.

L'important est que le clip puisse être positionné à cheval sur le bossage sans modification de sa forme ; les pattes et a fortiori leurs extrémités distales ne doivent pas gêner ce positionnement à cheval ; l'extrémité des pattes n'est déformée qu'après ce positionnement à cheval.

Comme visible en figure 7, le clip 5 présente par ailleurs un plan transversal de symétrie, c'est le plan selon BB qui est perpendiculaire au plan P.

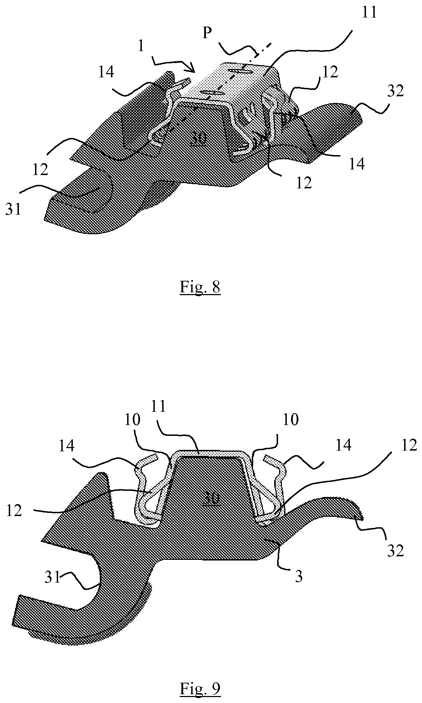

Sur les figures 8 à 12 un cordon profilé 3 est illustré en coupe transversale, c'est-à-dire en coupe selon la ligne tiret-point visible sur la figure 1.

Ce cordon profilé 3 présente une cavité 31 en forme de U en coupe transversale, pour l'accueil du vitrage 4 qui n'est pas illustré sur ces figures.

Ce cordon profilé 3 présente par ailleurs une lèvre 32 pour le raccordement à la carrosserie du véhicule.

Ce cordon profilé 3 présente par ailleurs un bossage 30 disposé entre la cavité 31 et la lèvre 32.

Ce bossage 30 présente une largeur (mesurée selon la transversale) inférieure à la largeur 111 de la base 11 dudit clip et une hauteur au moins égale et de préférence de 5 à 10 % supérieure à la hauteur h5 dudit clip.

Dans la version illustrée ici, les parois latérales du bossage ne sont pas verticales et présente une inclinaison identique à l'inclinaison des pattes 10 vis-à-vis de la base 11.

Pour opérer le montage de l'enjoliveur 2' (pièce rapportée) sur la portion du cordon profilé 3, il faut dans un premier temps positionner le clip 5 du dispositif intermédiaire à cheval sur le bossage 30, comme illustré en figures 8 et 9. Dans cette position, le clip 5 recouvre sensiblement la paroi supérieure et les parois latérales du bossage 30 : la base 11 repose sur la partie supérieure du bossage et les pattes 10 suivent l'inclinaison des parois latérales du bossage. Toutefois, dans cette position, les dents 13 des crochets 12 des pattes 10 ne pénètrent pas encore la matière du bossage 30.

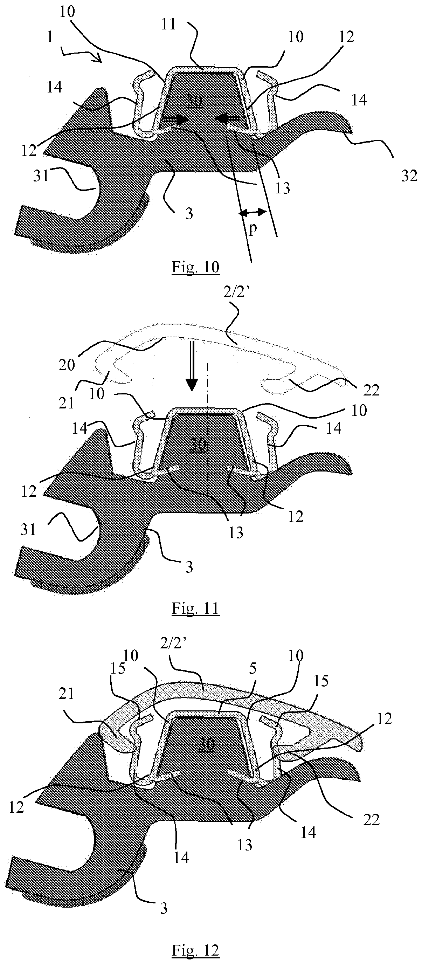

Dans un deuxième temps, une force, illustrée par les deux flèches doubles en figure 10, est appliquée contre les pattes 10 en direction du bossage 30 afin de faire pénétrer les dents 13 des crochets 12 dans la matière du bossage 30 sur une profondeur p (illustrée ici d'un seul côté pour plus de simplicité) d'au moins 0,5 mm, ou d'au moins 1 mm, et de préférence d'au moins 2 mm (ici, la profondeur p est de 2,2 mm.).

Cette profondeur p correspond sensiblement à la largeur du déporté des crochets 12 par rapport aux pattes 10, c'est-à-dire que les crochets 12 sont enfoncés dans la matière du bossage 30 jusqu'à ce que le point d'angle qui détermine le début du crochet à l'extrémité de la patte vienne en contact avec la paroi latérale du bossage. Etant donné que la matière du cordon profilé 3 est plus souple que celle des pattes, il est même possible d'appliquer une force de contraction des pattes 10 en vis-à-vis l'une vers l'autre de telle sorte que le bossage 30 se trouve quelque peu écrasé ; il s'agit d'un moyen permettant de s'assurer visuellement que les pattes ont correctement pénétrer le bossage.

La déformation de deux pattes en vis-à-vis l'une vers l'autre agit en quelque sorte comme une mâchoire se refermant sur le bossage 30.

Il est important de constater que la déformation appliquée aux pattes pour faire pénétrer les crochets dans le bossage est une déformation plastique : une fois que la force de pénétration n'est plus appliquée, les crochets restent en place dans le bossage 30 ; seule une force d'enlèvement (ou pliage) contraire en sens à la force de pénétration (dépliage) et d'intensité au moins égale peut permettre de déformer les pattes 10 en sens inverse et peut permettre de retirer le clip (par exemple pour le recyclage du vitrage).

Il est d'ailleurs possible de mesurer la profondeur p par rapport à la surface du bossage 30 lorsque le clip est retiré en procédant à une coupe transversale du bossage à l'endroit de la pénétration des dents.

La force de pénétration peut être opérée manuellement, par exemple en prenant deux pattes 10 qui sont en vis-à-vis en pince entre le pouce et l'index.

La force de pénétration peut être aussi opérée à l'aide d'une pince, par exemple en prenant deux pattes 10 qui sont en vis-à-vis en pince entre deux bras d'une pince.

Pendant ce deuxième temps, les ailettes 14 restent immobiles. Dans le cas où une pince est utilisée, il est important que les bras de la pince ne déforment pas les ailettes 14.

Dans un troisième temps et dernier temps, illustré en figure 11, l'enjoliveur 2' est positionné sur le clip 5 et est clipé sur celui-ci en appliquant une force de clipage, illustrée par la double flèche, en direction de la paroi supérieur du bossage 30, sensiblement perpendiculairement à cette dernière.

La face intérieure 20 de l'enjoliveur, celle qui n'est pas visible une fois le vitrage monté dans la baie et qui est donc tournée en direction du clip, est munie à ses extrémités latérales de deux barrettes 21, 22 orientées en retour, vers le centre de l'enjoliveur (et donc vers le bossage 30).

Ces barrettes sont prévues sur la totalité de la longueur de l'enjoliveur ou sur une partie seulement de cette longueur, par exemple à intervalle régulier selon cette longueur pour permettre d'économiser de la matière constitutive de l'enjoliveur.

La barrette 21, la plus proche de la cavité 31 présente un retour simple orienté selon un angle légèrement inférieur à 90 ° (de l'ordre de 85 °) et la barrette 22, la plus proche de la lèvre 32 présente un retour double orienté une première fois selon un angle légèrement inférieur à 45 ° (de l'ordre de 40 °) et une seconde fois selon un angle de l'ordre de 70 ° par rapport à la partie précédente.

Les extrémités libres des deux barrettes ne sont pas des angles vifs mais des angles arrondis.

Ces barrettes sont conçues de manière à être plus flexibles que les ailettes 14. Lors du clipage de l'enjoliveur, ces barrettes se déforment ainsi de manière élastique pour passer les extrémités 15 des ailettes 14.

Les barrettes agissent ainsi à la manière d'un ressort exerçant en permanence une force de réaction : c'est ce qui permet le montage en absorbant les tolérances et c'est aussi de qui permet de maintenir en permanence l'enjoliveur sur le clip, malgré les vibrations lors du déplacement du véhicule.

La figure 12 illustre le montage fini, après les trois étapes essentielles.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Procédé de montage d'une pièce rapportée (2), telle qu'un enjoliveur (2'), sur une portion d'un cordon profilé (3) fixé à la périphérie d'un vitrage (4), ce montage étant opéré par l'intermédiaire d'un dispositif de fixation intermédiaire (1), ce dispositif de fixation intermédiaire comportant au moins un clip (5) présentant au moins une partie de coopération amont destinée à permettre la coopération avec ledit cordon profilé (3) et une partie de coopération aval destinée à permettre la coopération avec ladite pièce rapportée (2), ledit procédé comportant une étape de fixation dudit dispositif de fixation intermédiaire (1) sur ledit cordon profilé (3), **caractérisé en ce que** ledit dispositif de fixation intermédiaire comporte une partie de coopération amont présentant une pluralité de pattes (10) d'accrochage reliées par une base (11), ladite base (11) étant sensiblement plate et lesdites pattes (10) étant orientées sensiblement perpendiculairement à ladite base (11) avec lesdites pattes disposées par deux diamétralement opposées par rapport à un plan de symétrie longitudinal central de ladite base (11), lesdites pattes (10) se terminant à leur extrémité pénétrant dans la matière du cordon profilé (3) par une pluralité de dents (13) pointues, l'extrémité de chaque patte étant déformable, lesdites extrémités des pattes étant déformées en appliquant une force sur les extrémités desdites pattes (10) en direction de la matière dudit cordon profilé (3) dans deux sens opposés pour pénétrer la matière dudit cordon profilé (3) lors de l'étape de fixation.

2. Procédé de montage selon la revendication 1, **caractérisé en ce que** la pénétration des extrémités desdites pattes est opérée sur une profondeur p d'au moins 0,2 mm à l'intérieur de la matière dudit cordon profilé (3).

3. Procédé de montage selon la revendication 1 ou la revendication 2, **caractérisé en ce que** la pénétration des dites pattes est opérée en appliquant une force manuellement ou par l'intermédiaire d'une installation.

4. Procédé de montage selon l'une quelconque des revendications 1 à 3, **caractérisé en ce que** ledit cordon profilé (3) présente un bossage (30) d'une largeur inférieure à la base (11) dudit clip, ledit clip étant positionné à cheval sur ledit bossage avant que l'extrémité desdites pattes (10) pénètre la matière dudit bossage (30.

5. Procédé de montage selon l'une quelconque des revendications 1 à 4, **caractérisé en ce que** ledit cordon profilé (3) présente un bossage (30) d'une hauteur au moins égale et de préférence supérieure à la hauteur dudit clip, ledit clip étant positionné à cheval sur ledit bossage avant que l'extrémité desdites pattes (10) pénètre la matière dudit bossage (30).

6. Dispositif de fixation intermédiaire (1) pour le montage d'une pièce rapportée (2), telle qu'un enjoliveur (2'), sur une portion d'un cordon profilé (3) fixé à la périphérie d'un vitrage (4), ledit dispositif comportant au moins un clip (5) présentant au moins une partie de coopération amont destinée à permettre la coopération avec ledit cordon profilé (3) et une partie de coopération aval destinée à permettre la coopération avec ladite pièce rapportée (2), **caractérisé en ce que** ladite partie de coopération amont présente une pluralité de pattes (10) d'accrochage reliées par une base (11), ladite base (11) étant sensiblement plate, lesdites pattes (10) étant orientées sensiblement perpendiculairement à ladite base (11) avec lesdites pattes disposées par deux diamétralement opposées par rapport à un plan de symétrie longitudinal central de ladite base (11), lesdites pattes (10) se terminant à leur extrémité pénétrant dans la matière du cordon profilé (3) par une pluralité de dents (13) pointues, l'extrémité de chaque patte étant déformable, lesdites extrémités des pattes étant déformées en appliquant une force sur les extrémités desdites pattes (10) en direction de la matière dudit cordon profilé (3) dans deux sens opposés pour pénétrer la matière dudit cordon profilé (3) lors de l'étape de fixation du clip (5) sur ledit cordon profilé (3).

7. Dispositif de fixation intermédiaire (1) selon la revendication 6, **caractérisé en ce que** lesdites pattes (10) comportent chacune au moins une partie en crochet (12), plié à l'opposé de ladite base (11), de préférence selon un angle compris entre 30° et 70 °, par rapport à la perpendiculaire à ladite base (11).

8. Vitrage (4) comportant au moins un dispositif de fixation intermédiaire (1) selon l'une quelconque des revendications 6 ou 7 pour le montage d'une pièce rapportée (2), telle qu'un enjoliveur (2'), sur une portion d'un cordon profilé (3) fixé à la périphérie du vitrage (4), ledit dispositif comportant au moins un clip (5) présentant au moins une partie de coopération amont destinée à permettre la coopération avec ledit cordon profilé (3) et une partie de coopération aval destinée à permettre la coopération avec ladite pièce rapportée (2), **caractérisé en ce que** ladite partie de coopération amont présente une pluralité de pattes (10) d'accrochage reliées par une base (11), ladite base (11) étant sensiblement plate, lesdites pattes (10) étant orientées sensiblement perpendiculairement à ladite base (11) avec lesdites pattes disposées par deux diamétralement opposées par rapport à un plan de symétrie longitudinal central de ladite base (11), lesdites pattes (10) se terminant à leur extrémité pénétrant dans la matière du cordon profilé (3) par une pluralité de dents (13) pointues, l'extrémité de chaque patte étant déformables, lesdites extrémités des pattes étant déformées en appliquant une force sur les extrémités desdites pattes (10) en direction de la matière dudit cordon profilé (3) dans deux sens opposés pour pénétrer la matière dudit cordon profilé (3) lors de l'étape de fixation du clip (5) sur ledit cordon profilé (3).

9. Utilisation du dispositif de fixation intermédiaire (1) selon l'une quelconque des revendications 6 ou 7 pour le montage d'une pièce rapportée (2), telle qu'un enjoliveur (2'), sur un cordon profilé (3) fixé à la périphérie d'un vitrage (4), avec une étape de fixation dudit dispositif de fixation intermédiaire (1) sur ledit cordon profilé (3), **caractérisé en ce que** ledit dispositif de fixation intermédiaire (1) comporte une partie de fixation amont présentant une pluralité de pattes d'accrochage reliées par une base (11), ladite base (11) étant sensiblement plate, lesdites pattes (10) étant orientées sensiblement perpendiculairement à ladite base (11) avec lesdites pattes disposées par deux diamétralement opposées par rapport à un plan de symétrie longitudinal central de ladite base (11), lesdites pattes (10) se terminant à leur extrémité pénétrant dans la matière du cordon profilé (3) par une pluralité de dents (13) pointues, l'extrémité de chaque patte étant déformable, lesdites extrémités des pattes étant déformées en appliquant une force sur les extrémités desdites pattes (10) en direction de la matière dudit cordon profilé (3) dans deux sens opposés pour pénétrer la matière dudit cordon profilé lors de l'étape de fixation.

## Patentansprüche

1. Verfahren zum Montieren eines Einsatzes (2), wie z. B. eines Abdeckelements (2'), auf einem an dem Umfang einer Scheibe (4) befestigten Abschnitt eines Profilstrangs (3), wobei die Montage über eine Zwischenbefestigungsvorrichtung (1) erfolgt, wobei die Zwischenbefestigungsvorrichtung mindestens eine Klammer (5) mit mindestens einem vorgeschalteten Eingriffsteil, der das Zusammenwirken mit dem Profilstrang (3) ermöglicht, und einem nachgeschalteten Eingriffsteil, der das Zusammenwirken mit dem Einsatz (2) ermöglicht, umfasst, wobei das Verfahren einen Schritt zum Befestigen der Zwischenbefestigungsvorrichtung (1) auf dem Profilstrang (3) umfasst, **dadurch gekennzeichnet, dass** die Zwischenbefestigungsvorrichtung einen vorgeschalteten Eingriffsteil mit einer Vielzahl von Befestigungslaschen (10) umfasst, die durch eine Basis (11) verbunden sind, wobei die Basis (11) im Wesentlichen flach ist und die Laschen (10) im Wesentlichen senkrecht zu der Basis (11) ausgerichtet sind, wobei die Laschen paarweise diametral gegenüberliegend bezüglich einer zentralen Längssymmetrieebene der Basis (11) angeordnet sind, wobei die Laschen (10) an ihrem in das Material des Profilstrangs (3) eindringenden Ende mit einer Vielzahl von spitzen Zähnen (13) abschließen, wobei das Ende jeder Lasche verformbar ist, wobei die Enden der Laschen durch Aufbringen einer Kraft auf die Enden der Laschen (10) in Richtung des Materials des Profilstrangs (3) in zwei entgegengesetzten Richtungen verformt werden, um während des Befestigungsschritts in das Material des Profilstrangs (3) einzudringen.

2. Verfahren zum Montieren nach Anspruch 1, **dadurch gekennzeichnet, dass** das Eindringen der Enden der Laschen bis zu einer Tiefe p von mindestens 0,2 mm in das Innere des Materials des Profilstrangs (3) erfolgt.

3. Verfahren zum Montieren nach Anspruch 1 oder Anspruch 2, **dadurch gekennzeichnet, dass** das Eindringen der Laschen durch Aufbringen einer Kraft von Hand oder über eine Anlage erfolgt.

4. Verfahren zum Montieren nach einem der Ansprüche 1 bis 3, **dadurch gekennzeichnet, dass** der Profilstrang (3) eine Nocke (30) mit einer Breite aufweist, die kleiner als die Basis (11) der Klammer ist, wobei die Klammer rittlings auf der Nocke positioniert ist, bevor das Ende der Laschen (10) in das Material der Nocke (30) eindringt.

5. Verfahren zum Montieren nach einem der Ansprüche 1 bis 4, **dadurch gekennzeichnet, dass** der Profilstrang (3) eine Nocke (30) mit einer Höhe aufweist, die mindestens gleich und vorzugsweise größer als die Höhe der Klammer ist, wobei die Klammer rittlings auf der Nocke positioniert ist, bevor das Ende der Laschen (10) in das Material der Nocke (30) eindringt.

6. Zwischenbefestigungsvorrichtung (1) zum Montieren eines Einsatzes (2), wie z. B. eines Abdeckelements (2'), auf einem an dem Umfang einer Scheibe (4) montierten Abschnitt eines Profilstrangs (3), wobei die Vorrichtung mindestens eine Klammer (5) mit mindestens einem vorgeschalteten Eingriffsteil, der das Zusammenwirken mit dem Profilstrang (3) ermöglichen soll, und einem nachgeschalteten Eingriffsteil, der das Zusammenwirken mit dem Einsatz (2) ermöglicht, umfasst, **dadurch gekennzeichnet, dass** das vorgeschaltete Eingriffsteil eine Vielzahl von Befestigungslaschen (10) aufweist, die durch eine Basis (11) verbunden sind, wobei die Basis (11) im Wesentlichen flach ist, wobei die Laschen (10) im Wesentlichen senkrecht zu der Basis (11) ausgerichtet sind, wobei die Laschen paarweise diametral gegenüberliegend bezüglich einer zentralen Längssymmetrieebene der Basis (11) angeordnet sind, wobei die Laschen (10) an ihrem in das Material des Profilstrangs (3) eindringenden Ende mit einer Vielzahl von spitzen Zähnen (13) abschließen, wobei das Ende jeder Lasche verformbar ist, wobei die Enden der Laschen durch Aufbringen einer Kraft auf die Enden der Laschen (10) in Richtung des Materials des Profilstrangs (3) in zwei entgegengesetzten Richtungen verformt werden, um während des Befestigungsschritts der Klammer (5) auf dem Profilstrang (3) in das Material des Profilstrangs (3) einzudringen.

7. Zwischenbefestigungsvorrichtung (1) nach Anspruch 6, **dadurch gekennzeichnet, dass** die Laschen (10) jeweils mindestens einen hakenförmigen Teil (12) aufweisen, der gegenüber der Basis (11) vorzugsweise in einem Winkel zwischen 30° und 70° zur Senkrechten der Basis (11), gebogen ist.

8. Scheibe (4), die mindestens eine Zwischenbefestigungsvorrichtung (1) nach einem der Ansprüche 6 oder 7 zum Montieren eines Einsatzes (2), wie z. B. eines Abdeckelements (2'), auf einem Abschnitt eines an dem Umfang der Scheibe (4) befestigten Profilstrangs (3) umfasst, wobei die Vorrichtung mindestens eine Klammer (5) mit mindestens einem vorgeschalteten Eingriffsteil, der das Zusammenwirken mit dem Profilstrang (3) ermöglichen soll, und einem nachgeschalteten Eingriffsteil, der das Zusammenwirken mit dem Einsatz (2) ermöglichen soll, umfasst, **dadurch gekennzeichnet, dass** der vorgeschaltete Eingriffsteil eine Vielzahl von Befestigungslaschen (10) aufweist, die durch eine Basis (11) verbunden sind, wobei die Basis (11) im Wesentlichen flach ist, wobei die Laschen (10) im Wesentlichen senkrecht zu der Basis (11) ausgerichtet sind, wobei die Laschen paarweise diametral gegenüberliegend bezüglich einer zentralen Längssymmetrieebene der Basis (11) angeordnet sind, wobei die Laschen (10) an ihrem in das Material des Profilstrangs (3) eindringenden Ende mit einer Vielzahl von spitzen Zähnen (13) abschließen, wobei das Ende jeder Lasche verformbar ist, wobei die Enden der Laschen durch Aufbringen einer Kraft auf die Enden der Laschen (10) in Richtung des Materials des Profilstrangs (3) in zwei entgegengesetzten Richtungen verformt werden, um während des Befestigungsschritts der Klammer (5) auf dem Profilstrang (3) in das Material des Profilstrangs (3) einzudringen.

9. Verwendung der Zwischenbefestigungsvorrichtung (1) nach einem der Ansprüche 6 oder 7 zum Montieren eines Einsatzes (2), wie z. B. eines Abdeckelements (2'), auf einem an dem Umfang einer Scheibe (4) montierten Profilstrang (3), mit einem Schritt zum Befestigen der Zwischenbefestigungsvorrichtung (1) auf dem Profilstrang (3), **dadurch gekennzeichnet, dass** die Zwischenbefestigungsvorrichtung (1) einen vorgeschalteten Eingriffsteil mit einer Vielzahl von Befestigungslaschen umfasst, die durch eine Basis (11) verbunden sind, wobei die Basis (11) im Wesentlichen flach ist, wobei die Laschen (10) im Wesentlichen senkrecht zu der Basis (11) ausgerichtet sind, wobei die Laschen durch zwei diametral gegenüberliegende Laschen bezüglich einer zentralen Längssymmetrieebene der Basis (11) angeordnet sind, wobei die Laschen (10) an ihrem Ende mit einer Vielzahl von spitzen Zähnen (13) abschließen, die in das Material des Profilstrangs (3) eindringen, wobei das Ende jeder Lasche verformbar ist, wobei die Enden der Laschen durch Aufbringen einer Kraft auf die Enden der Laschen (10) in Richtung des Materials des Profilstrangs (3) in zwei entgegengesetzten Richtungen verformt werden, um während des Befestigungsschritts in das Material des Profilstrangs einzudringen.

## Claims

1. A method of fitting an attachment (2), such as a trim (2'), onto a portion of a profiled strip (3) fastened to the periphery of a glazing pane (4), this fitting operation being carried out by means of an intermediate fastening device (1), this intermediate fastening device comprising at least one clip (5) having at least one upstream cooperating part intended to cooperate with said profiled strip (3) and a downstream cooperating part intended to cooperate with said attachment (2), said method including a step of fastening said intermediate fastening device (1) onto said profiled strip (3), **characterized in that** said intermediate fastening device includes an upstream cooperating part having a plurality of catching tabs (10) joined by a base (11), said base (11) being substantially flat and said tabs (10) being oriented substantially perpendicular to said base (11) with said tabs arranged in diametrically opposed pairs relative to a central plane of longitudinal symmetry of said base (11), said tabs (10) terminating at their ends that penetrate into the material of the profiled strip (3) in a plurality of pointed teeth (13), the end of each tab being deformable, said ends of the tabs being deformed by applying a force to the ends of said tabs (10) toward the material of said profiled strip (3) in two opposed directions so as to penetrate the material of said profiled strip (3) during the fastening step.

2. The fitting method as claimed in claim 1, **characterized in that** the ends of said tabs penetrate over a depth p of at least 0.2 mm into the material of said profiled strip (3).

3. The fitting method as claimed in claim 1 or claim 2, **characterized in that** said tabs penetrate by applying a force manually or by means of a tool.

4. The fitting method as claimed in any one of claims 1 to 3, **characterized in that** said profiled strip (3) has a protrusion (30) with a width smaller than the base (11) of said clip, said clip being positioned astride said protrusion before the ends of said tabs (10) penetrate the material of said protrusion (30).

5. The fitting method as claimed in any one of claims 1 to 4, **characterized in that** said profiled strip (3) has a protrusion (30) with a height at least equal to and preferably greater than the height of said clip, said clip being positioned astride said protrusion before the ends of said tabs (10) penetrate the material of said protrusion (30).

6. An intermediate fastening device (1) for fitting an attachment (2), such as a trim (2'), onto a portion of a profiled strip (3) fastened to the periphery of a glazing pane (4), said device comprising at least one clip (5) having at least an upstream cooperating part intended to cooperate with said profiled strip (3) and a downstream cooperating part intended to cooperate with said attachment (2), **characterized in that** said upstream cooperating part has a plurality of catching tabs (10) joined by a base (11), said base (11) being substantially flat and said tabs (10) being oriented substantially perpendicular to said base (11) with said tabs arranged in diametrically opposed pairs relative to a central plane of longitudinal symmetry of said base (11), said tabs (10) terminating at their ends that penetrate into the material of the profiled strip (3) in a plurality of pointed teeth (13), the end of each tab being deformable, said ends of the tabs being deformed by applying a force to the ends of said tabs (10) toward the material of said profiled strip (3) in two opposed directions in order to penetrate the material of said profiled strip (3) during the step of fastening the clip (5) onto said profiled strip (3).

7. The intermediate fastening device (1) as claimed in claim 7, **characterized in that** said tabs (10) each include at least one hook-shaped part (12) bent away from said base (11), preferably at an angle of between 30° and 70° relative to the perpendicular to said base (11).

8. A glazing pane (4) that includes at least one intermediate fastening device (1) as claimed in any one of claims 6 or 7 for the fitting of an attachment (2), such as a trim (2'), onto a portion of a profiled strip (3) fastened to the periphery of the glazing pane (4), said device comprising at least one clip (5) having at least an upstream cooperating part intended to cooperate with said profiled strip (3) and a downstream cooperating part intended to cooperate with said attachment (2), **characterized in that** said upstream cooperating part has a plurality of catching tabs (10) joined by a base (11), said base (11) being substantially flat and said tabs (10) being oriented substantially perpendicular to said base (11) with said tabs arranged in diametrically opposed pairs relative to a central plane of longitudinal symmetry of said base (11), said tabs (10) terminating at their ends that penetrate into the material of the profiled strip (3) in a plurality of pointed teeth (13), the end of each tab being deformable, said ends of the tabs being deformed by applying a force to the ends of said tabs (10) toward the material of said profiled strip (3) in two opposed directions in order to penetrate the material of said profiled strip (3) during the step of fastening the clip (5) onto said profiled strip (3).

9. The use of the intermediate fastening device (1) as claimed in any one of claims 6 or 7 for fitting an attachment (2), such as a trim (2'), onto a profiled strip (3) fastened to the periphery of a glazing pane (4), with a step of fastening said intermediate fastening device (1) onto said profiled strip (3), **characterized in that** said intermediate fastening device (1) has an upstream fastening part having a plurality of catching tabs joined by a base (11), said base (11) being substantially flat and said tabs (10) being oriented substantially perpendicular to said base (11) with said tabs arranged in diametrically opposed pairs relative to a central plane of longitudinal symmetry of said base (11), said tabs (10) terminating at their ends that penetrate into the material of the profiled strip (3) in a plurality of pointed teeth (13), the end of each tab being deformable, said ends of the tabs being deformed by applying a force to the ends of said tabs (10) toward the material of said profiled strip (3) in two opposed directions in order to penetrate the material of said profiled strip during the fastening step.
